Europäisches Patentamt

European Patent Office

Office européen des brevets

(11) Numéro de publication: **0 420 734 A1**

## (12) DEMANDE DE BREVET EUROPEEN

(21) Numéro de dépôt: 90402628.3

(51) Int. Cl.⁵: **A01B 73/04**, A01C 7/00

(22) Date de dépôt: 24.09.90

(30) Priorité: 28.09.89 FR 8912715

(43) Date de publication de la demande:
03.04.91 Bulletin 91/14

(84) Etats contractants désignés:
**BE DE ES IT**

(71) Demandeur: **NODET-GOUGIS Société anonyme dite:**

F-77130 Montereau(FR)

(72) Inventeur: **Coulmont, Philippe**
**5, rue Pierre Brossolette**
**F-77130 Montereau(FR)**

(74) Mandataire: **Le Brusque, Maurice et al**
**Cabinet Harlé et Phélip 21, rue de la**
**Rochefoucauld**
**F-75009 Paris(FR)**

(54) Semoir repliable perfectionné.

(57) Le semoir comporte trois tronçons transversaux (13, 35) par rapport à sa direction de déplacement (F), l'un des trois tronçons étant un tronçon central fixe (13), supporté par la partie centrale du châssis (1) à l'arrière de celle-ci et les deux autres tronçons étant des tronçons latéraux (35) dont chacun est relié à la partie centrale de châssis (1) par un mécanisme d'articulation à vérin de manoeuvre (42) de sorte que chaque tronçon latéral (35) est déplaçable transversalement et verticalement par rapport au tronçon central (13), entre deux positions extrêmes, dont l'une est une position de travail, dans laquelle le tronçon latéral (35) est sensiblement aligné bout à bout dans le prolongement du tronçon central (13), et dont l'autre est une position de transport dans laquelle le tronçon latéral (35) est relevé au-dessus du tronçon latéral (13).

Le mécanisme d'articulation est un mécanisme à parallèlogramme déformable dont deux extrémités adjacentes sont articulées sur ladite partie centrale fixe (1) et dont une autre extrémité opposée auxdites extrémités adjacentes supporte un tronçon latéral (35).

Utilisation pour augmenter la capacité des trémies d'alimentation en grains et en fertiliseurs.

FIG. 2

## SEMOIR REPLIABLE PERFECTIONNÉ.

La présente invention concerne un semoir à éléments semeurs, de type tractable , monté sur des roues porteuses , et comprenant un châssis repliable latéralement , dont une partie centrale fixe est munie de points d'attelage à un véhicule tracteur , et une poutre porte-éléments , comportant trois tronçons transversaux par rapport à la direction de déplacement du semoir, dont chacun supporte plusieurs éléments semeurs montés côte-à-côte , avec un espacement déterminé, le long du tronçon correspondant et en porte-à-faux vers l'arrière de ce tronçon, l'un des trois tronçons étant un tronçon central fixe , supporté par la partie centrale du châssis à l'arrière de celle-ci, et les deux autres tronçons étages tronçons latéraux dont chacun est relié à la partie centrale de châssis par un mécanisme d'articulation à vérin de manoeuvre de sorte que chaque tronçon latéral est déplaçable , transversalement et verticalement par rapport au tronçon central, entre deux postions extrêmes , dont l'une est une position de travail, dans laquelle le tronçon latéral est sensiblement aligné bout à bout dans le prolongement du tronçon central, et dont l'autre est une position de transport, dans laquelle le tronçon latéral est relevé au-dessus du tronçon central.

Le FR-A-2.577.747 décrit un semoir du genre précité . L'inconvénient majeur d'un tel semoir qui procure toutefois , grâce au repliage des poutres latérales de semage , une grande largeur de travail et une hauteur de transport compatible avec les normes de circulation routière tout en permettant le passage de l'une des configurations à l'autre de manière très rapide, réside dans le déplacement , parallèlement à lui-même, de chaque poutre ou tronçon latéral . En effet, cette cinématique implique que les trémies d'alimentation en graines (microgranulateurs ) et en engrais (fertiliseurs) de la poutre centrale fixe soient de capacité réduite et/ou en ombre réduit de manière à permettre le repliage des poutres latérales.

Un but de la présente invention est de proposer un semoir qui ne présente pas les inconvénients de l'art antérieur , c'est-à-dire en particulier, dont on puisse augmenter la capacité des trémies d'alimentation en graines et en engrais de la poutre centrale fixe sans accroître la hauteur, en position repliée, des poutres latérales .

Ainsi , le semoir selon l'invention est caractérisé en ce que le mécanisme d'articulation de chaque tronçon ou poutre latérale, est un mécanisme à parallèlogramme déformable dont deux extrémités adjacentes sont articulées sur ladite partie centrale fixe de châssis et dont une autre extrémité opposée auxdites extrémtés adjacentes supporte un tronçon latéral.

Selon une forme de réalisation avantageuse de l'invention, ledit parallèlogramme déformable comprend une première bielle dont une extrémité est articulée sur une biellette de renvoi elle-même montée à pivotement dans un plan sensiblement perpendiculaire à la direction de déplacement du semoir, par rapport à un élément de châssis solidaire de la partie centrale, un bras support dont une extrémité est articulée sur la partie centrale et dont l'autre extrémité supporte à pivotement un tronçon latéral et est reliée, de façon articulée, à la seconde extrémité de la première bielle par un levier qui forme un angle fixe par rapport audit tronçon latéral , et une seconde bielle qui relie, de manière articulée, la biellette de renvoi et l'extrémité du bras support articulée à la partie centrale de châssis, un vérin de manoeuvre étant monté entre la partie centrale fixe et des moyens d'appui solidaires du bras support.

Le mécanisme d'articulation précité permet d'une part d'allonger puis de raccourcir artificiellement, lors de la course de repliage du tronçon latéral correspondant, la longueur de la première belle et d'autre part d'incliner, pendant cette même course, du côté opposé à la poutre centrale, ledit tronçon latéral de sorte que les extrémités inférieures du soc et du disque ouvreur de l'élément semeur de la poutre latérale, situé du côté de la poutre centrale décrivent une trajectoire excentrée par rapport à la trajectoire décrite par ces mêmes éléments dans le semoir connu et, qu'en position de transport, ladite première bielle reprend sa longueur d'origine. Ainsi, la hauteur du semoir en position de transport n'a pas été augmentée.

Selon un aspect de l'invention, la biellette de renvoi comprend une chape de forme sensiblenent triangulaire dont un premier sommet est monté à pivotement par rapport à une extrémité supérieure de l'élément de châssis , un second sommet est articulé à une extrémité de la première bielle et un troisième sommet est articulé à une extrémité de la seconde bielle.

Selon un autre aspect de l'invention, le bras support est articulé à la partie centrale de châssis par l'intermédiaire d'une chape mobile solidaire de l'extrémité du bras support opposée au tronçon latéral correspondant et montée à pivotement, dans un plan sensiblement perpendiculaire à la direction de déplacement du semoir, par rapport à une chape fixe solidaire de ladite partie fixe, l'une des extrémités du vérin de manoeuvre étant solidaire de la chape mobile.

De préférence, la partie fixe de châssis comprend une poutre centrale solidaire d'une poutre support en forme de V renversé , à la partie inférieure de laquelle est articulé chaque bras support et au sommet de laquelle est solidarisée l'une des extrémités du vérin de manoeuvre, la poutre support supportant également ledit élément de châssis qui est conformé en V et dont les deux sommets portent chacun une biellette de renvoi . En outre, ladite poutre centrale porte à chaque extrémité inférieure , une desdites chapes fixes.

Ainsi , en position de travail de chaque tronçon latéral, les points de la biellette de renvoi respectivement articulés à la partie fixe de châssis et à la première bielle sont alignés suivant une direction sensiblement parallèle aux tronçons latéraux et la seconde bielle est en position sensiblement horizontale et en position de transport de chaque tronçon latéral, les points de la biellette de renvoi respectivement articulés à la partie fixe de châssis et à la première bielle sont alignés suivant une direction sensiblement parallèle aux tronçons latéraux et la seconde bielle est en position sensiblement verticale.

De préférence, le corps de chaque vérin de manoeuvre est solidarisé à la partie fixe de châssis tandis que sa tige est solidarisée à l'extrémité du bras support opposée au tronçon latéral correspondant.

L'invention sera mieux comprise à l'aide d'un exemple particulier de réalisation, décrit ci-dessous à titre non limitatif , en référence aux dessins annexés auxquels :

La figure 1 est une vue schématique en élévation de face d'un semoir de l'art antérieur, dont la position de travail est représentée en traits pleins et dont la position de transport et une position intermédiaire de repliage sont représentées en traits mixtes.

La figure 2 est une vue identique à la figure 1 mais représentant la position de travail du semoir conforme à l'invention , et

la figure 3 est une vue identique aux précédentes représentant la position de transport et une position intermédiaire de repliage du semoir selon la présente invention.

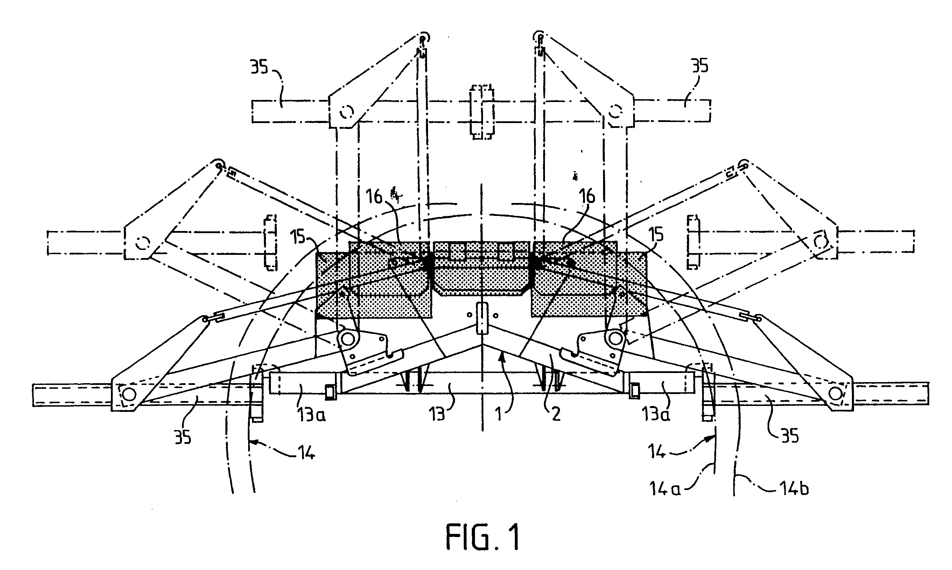

Les mêmes éléments de semoir portent les mêmes références aux figures 1 à 3.

En référence à la figure 1 , le semoir connu comprend une poutre centrale de châssis 1 , par exemple en tube métallique de section rectangulaire , dont la partie centrale 2 est en forme de Y renversé et se prolonge de chaque côté par une partie d'extrémité 3 sensiblement horizontale. La poutre de châssis 1 est transversale par rapport à la direction de déplacement du semoir, indiquée par la flèche F sur la figure 1, et est symétrique par rapport au plan médian et de symétrie M du semoir. La partie centrale 2 porte, de préférence sur ses côtés inclinés , des plaques d'attelage verticales (40 et 50) constituant deux points d'attelage latéraux et inférieurs , symétriques l'un de l'autre l'ensemble formant un attelage classique permettant la liaison du semoir à un véhicule tracteur muni d'une prise de force à laquelle on peut raccorder une prise de force équipant le semoir et passant dans le grand V de la partie centrale 2 de la poutre 1.

Le semoir comprend également une poutre porte-éléments 13, 35, comportant trois tronçons transversaux par rapport à la direction de déplacement F du semoir. Chaque tronçon supporte plusieurs éléments semeurs 14 montés côte-à-côte (aux figures, seules les trajectoires des éléments semeurs 14 de tronçon latéral 35, situés le plus près de la poutre centrale 13 , ont été représentées), avec un espacement déterminé , le long du tronçon correspondant et en porte-à-faux vers l'arrière de ce tronçon . L'un des trois tronçons est un tronçon central fixe 13 , supporté par la partie centrale de châssis 1 à l'arrière de celle-ci , et les deux autres tronçons sont des tronçons latéraux 35

.

Chaque tronçon latéral 35 est relié à la partie centrale de châssis 1 , d'une manière que l'on décrira en détail plus loin, par un mécanisme d'articulation à vérin de manoeuvre 42 de sorte que chaque tronçon latéral 35 est déplaçable, transversalement et verticalement par rapport au tronçon central 13, entre deux positions extrêmes , dont l'une est une position de travail, dans laquelle le tronçon latéral 35 est sensiblement aligné bout-à-bout dans le prolongement du tronçon central 13, et dont l'autre est une position de transport, dans laquelle le tronçon latéral 35 est relevé au-dessus du tronçon central 13.

Dans le semoir connu représenté à la figure 1, le mécanisme d'articulation de chaque tronçon latéral 35 , que l'on ne décrira pas en détail , est un mécanisme à parallèlogramme fixe qui procure un déplacement, parallèlement à lui-même , de chaque tronçon latéral 35.Le mécanisme à parallèlogramme fixe présente les inconvénients mentionnés au début du présent mémoire. Ainsi, comme on le voit à la figure 1, les trajectoires 14a et 14b respectivement du soc et du disque ouvreur oe l'élément semeur 14 de chaque poutre 35, situé le plus près de la poutre centrale 13, coupent , lorsque le tronçon 35 latéral passe de sa position de travail à sa position de repos ou vice versa , le coin supérieur gauche des trémies 15 et 16 respectivement d'alimentation en graines ( microgranulateurs ) et d'alimentation en engrais (fertiliseurs) solidaires de la poutre centrale 13. Par conséquent, dans le semoir connu de la figure 1, les trémies repérées 15 et 16 ne peuvent être maintenues.

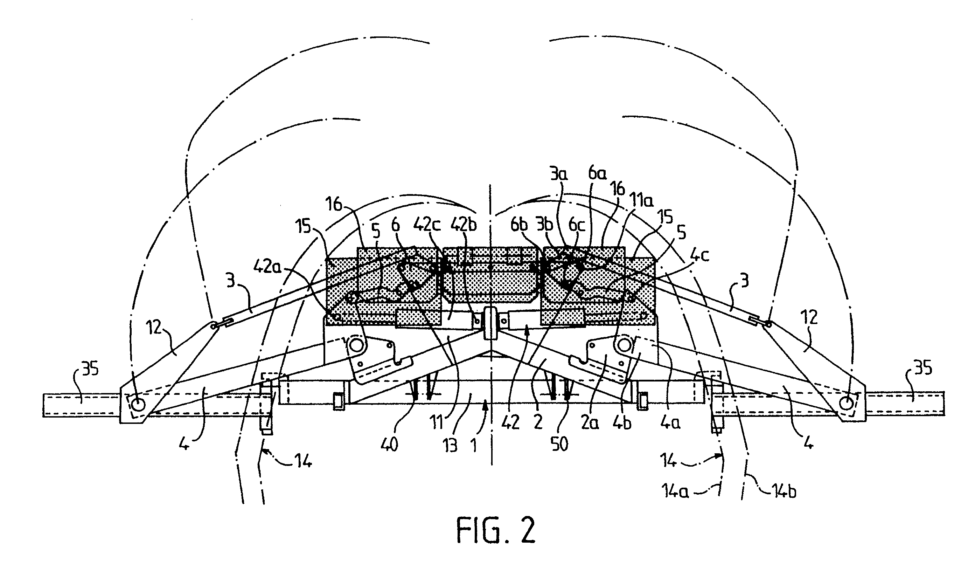

Le semoir conforme à l'invention,qui est représenté en détail aux figures 2 (en position de travail ) et 3 (position de repos et position intermédiaire de repliage ) , se caractérise en ce que le mécanisme d'articulation à parallèlogramme fixe du semoir connu est remplacé par un mécanisme à parallèlogramme déformable dont , en particulier , deux extrémités adjacentes sont articulées sur la partie centrale fixe 1 et dont une autre extrémité opposée auxdites extrémités adjacentes supporte un tronçon latéral 35.

Plus précisément , ledit parallèlogramme déformable comprend une première bielle 3 dont une extrémité 3a est articulée , au moyen d'un bras 3b , sur une biellette de renvoi 6 elle-même montée à pivotement , dans un plan sensiblement perpendiculaire à la direction de déplacement F du semoir, par rapport à un élément de châssis 11 solidaire de la partie centrale de châssis 1, un bras support 4 dont une extrémité 4a est articulée en 4c sur la partie centrale 1 et dont l'autre extrémité supporte à pivotement un tronçon latéral 35 et est reliée , de façon articulée , à la seconde extrémité de la première bielle 3 par un levier 12 qui forme un angle fixe par rapport audit tronçon latéral 35 , et une seconde bielle 5 qui relie, de manière articulée , la biellette de renvoi 6 et l'extrémité 4a du bras support 4 articulée à la partie centrale 1, un vérin de manoeuvre 42 étant monté entre la partie centrale 1 de châssis et des moyens d'appui 4b solidaires du bras support 4.

La biellette de renvoi 6 comprend , selon une forme de réalisation préférée , une chape de forme sensiblement triangulaire dont un premier sommet 6a est monté à pivotement par rapport à une extrémité supérieure 11a de l'élément de châssis 11, un second sommet 6b est articulé au bras 3b solidaire de l'extrémité de la première bielle 3 opposée au levier 12, et un troisième sommet 6c est articulé à une extrémité de la seconde bielle 5.

Le bras support 4 de chaque parallèlogramme déformable d'articulation, est articulé à la partie centrale de châssis 1 par l'intermédiaire d'une chape mobile 4b , formant moyens d'appui pour la tige 42d du vérin 42 , de forme sensiblement trapézoïdale et solidaire de l'extrémité 4a du bras support 4 opposée au tronçon latéral 35 correspondant . La chape mobile 4b est montée à pivotement , dans un plan sensiblement perpendiculaire à la direction F du semoir, par rapport à une chape fixe 2a solidaire de la partie fixe de châssis 1.

Comme cela a déjà été précisé, la poutre centrale 13 de la partie fixe de châssis 1 est solidaire d'une poutre support 2 en forme de V renversé à la partie inférieure de chaque bras incliné de laquelle est solidarisée la chape fixe 2a à laquelle est articulé chaque bras support 4 , et au sommet de laquelle est solidarisée l'extrémité 42b du corps 42c du vérin de manoeuvre 42.La poutre support 2 supporte également ledit élément de châssis 11 qui est sensiblement conformé en V , dont la pointe serait dirigée vers la partie inférieure du semoir , et dont les deux sommets 11a supportent , à pivotement , chacun une biellette de renvoi 6 .

Comme on le voit aux figures 2 qui représente le semoir en position de travail et 3 qui représente le semoir en position de repos (en traits mixtes) et dans une position intermédiaire de repliage, les points 6a et 6b de la biellette de renvoi 6 respectivement articulés à l'élément de châssis 11 de la partie fixe de châssis 1 et à l'extrémité 3a de la première bielle 3, sont alignés suivant une direction sensiblement parallèle aux tronçons latéraux 35 et la seconde bielle 5 qui relie la biellette 6 à la chape mobile 4b est en position sensiblement horizontale , tandis qu'en position de transport de chaque tronçon latéral 35 , lesdits points 6a et 6b rection sensiblement parallèle aux tronçons latéraux 35 et la seconde bielle 5 est en position sensiblement verticale .

Bien entendu , le mouvement précité est réversible .

Chaque mécanisme d'articulation ci-dessus décrit procure deux effets techniques concomitants quant à la course de la poutre latérale de semage 35 actionnée par ledit mécanisme . D'une part , il permet , à partir de la position de travail du semoir, c'est-à-dire lorsque la tige 42d du vérin est en position sortie (position représentée à la figure 2) et au fur et à mesure du repliage de ladite poutre latérale 35 , de tout d'abord allonger , de manière " artificielle", la longueur de la première bielle 3 par pivotement dans le sens des aiguilles d'une montre de la biellette de renvoi 6 ,pour finalement ramener "à sa longueur initiale ladite bielle 3 en position complètement repliée de la poutre latérale de semage 35 correspondante ,par pivotement , dans le sens inverse des aiguilles d'une montre, de la biellette 6.

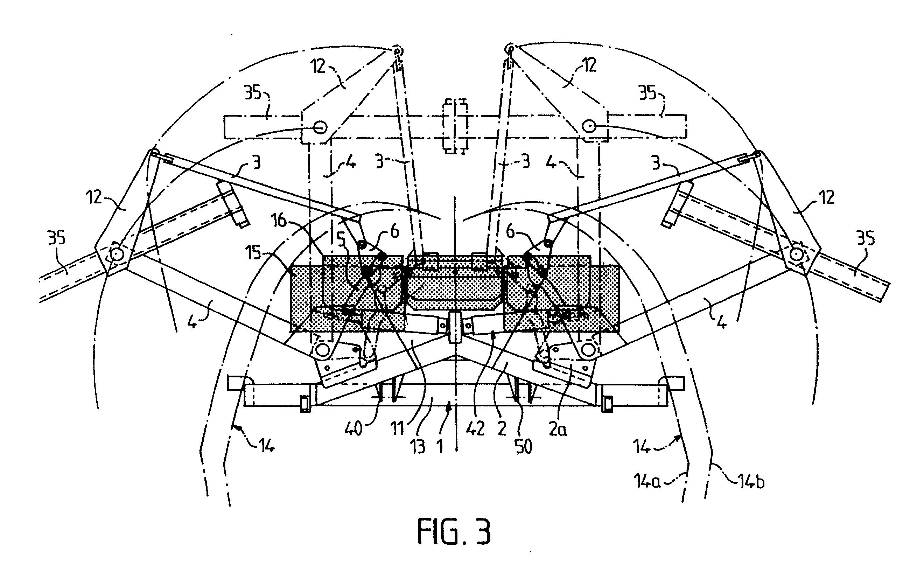

Le parallèlogramme déformable d'articulation permet également d'incliner,au cours de la course de repliage de la poutre 35 , vers la partie inférieure du semoir , c'est-à-dire du côté opposé à la poutre centrale 13 , la poutre 35 ainsi qu'on le voit à la figure 3, puis de ramener cette poutre 35 en position horizontale, en position de transport du semoir.

Ces effets techniques sont procurés grâce à une disposition relative appropriée des axes de pivotement de la biellette 6, de la seconde bielle 5 et du bras support 4, telle que représentée aux figures 2 et 3 , c'est-à-dire en particulier une conception de la biellette de renvoi 6 , de la seconde bielle 5 et de la chape fixe 4b solidaire du bras support 4 qui est telle que le point d'articulation 4c de la seconde bielle 5 à la chape fixe 4b passe, au cours de la course de repliage du bras support 35 correspondant , d'une position située en-dessous du point fixe 6a de pivotement de la biellette de renvoi 6 à une position située au-dessus de ce point de pivotement 6a , de sorte que le mouvement de rotation de la biellette de renvoi 6 s'inverse lors de ladite course de repliage au cours de la course de rétraction de la tige 42d du vérin de manoeuvre 42.

Comme on le voit aux figures 2 et 3 , grâce au dispositif selon l'invention, les trajectoires 14a et 14b respectivement du soc et du disque ouvreur de l'élément semeur 14 de chaque poutre 35, situé le plus près de la poutre centrale 13, sont excentrées par rapport aux trajectoires obtenues avec le semoir connu de la figure 1,de sorte que l'on peut conserver ou ajouter sur le semoir perfectionné selon l'invention les trémies "microgranulateurs " 15 et " fertiliseurs " 16 qui permettent d'accroître la capacité d'alimentation en grains et en fertilisants de ce semoir.

La demanderesse a constaté également que la présente invention procurait un effet technique inattendu particulièrement avantageux . En effet, le mécanisme d'articulation ci-dessus décrit permet de compenser le décalage longitudinal entre la poutre centrale 13 et les poutres latérales 35 qui est introduit par le décalage vertical entre ces éléments, nécessité par la compensation des inégalités de terrain lors de l'utilisation du semoir .

Grâce à l'invention, il est par exemple possible , avec un même châssis , de mettre en place sur la poutre centrale 13 douze trémies "fertiliseurs " au le de huit et trois trémies " microgranulateurs " au lieu de deux .

L'invention présente également l'avantage de pouvoir être adaptée aisément à un semoir connu (figure 1) par simple ajout de la biellette 6 et de la bielle 5.

Les signes de référence insérés après les caractéristiques techniques mentionnées dans les revendications, ont pour seul but de faciliter la compréhension de ces dernières, et n'en limitent aucunement la portée.


## Revendications

1. Semoir à éléments semeurs, de type tractable, monté sur des roues porteuses, et comprenant un châssis repliable latéralement, dont une partie centrale fixe (1) est munie de points d'attelage (40,50) à un véhicule tracteur, et une poutre porte-éléments (13,35), comportant trois tronçons transversaux par rapport à la direction de déplacement (F) du semoir, dont chacun supporte plusieurs éléments semeurs (14) montés côte-à-côte , avec un espacement déterminé, le long du tronçon correspondant et en porte-à-faux vers l'arrière de ce tronçon, l'un des trois tronçons étant un tronçon central fixe (13),supporté par la partie centrale du châssis (1) à l'arrière de celle-ci, et les deux autres tronçons des tronçons latéraux (35) dont chacun est relié à la partie centrale du châssis (1) par un mécanisme d'articulation à vérin de manoeuvre (42) de sorte que chaque tronçon latéral (35) est déplaçable, transversalement et verticalement par rapport au tronçon central (13), entre deux positions extrêmes dont l'une est une position en travail,dans laquelle le tronçon latéral (35) est sensiblement aligné bout à bout dans le prolongement du tronçon central (13), et dont l'autre est une position de transport ,dans laquelle le tronçon latéral (35) est relevé au-dessus du tronçon central (13), ledit mécanisme d'articulation étant un mécanisme dont deux extrémités adjacentes sont articulées sur ladite partie centrale fixe (1) et dont une autre extrémité opposée auxdites extrémités adjacentes supporte un tronçon latéral (35),ledit mécanisme d'articulation comportant un bras support (4) dont une extrémité (4a) est articulée sur la partie centrale (1) et dont l'autre extrémité supporte à pivotement un tronçon latéral (35) et est reliée,de façon articulée,à l'extrémité d'une première bielle (3) par un levier (12) qui forme un angle fixe par rapport audit tronçon latéral, un vérin de manoeuvre (42) étant monté entre la partie centrale (1) et des moyens d'appui (4b) solidaires du bras support (4), caractérisé en ce que ladite première bielle (3) est articulée à son autre extrémité sur une biellette de renvoi (6) elle-même montée en pivotement, dans un plan sensiblement perpendiculaire à la direction du déplacement (F) du semoir, par rapport à un élément de châssis (11) solidaire de la partie centrale (1), ledit semoir comportant encore une seconde bielle (5) qui relie, de manière articulée la biellette de renvoi (6) et l'extrémité (4a) du bras support (5) articulée à la partie centrale (1).

2. Semoir selon la revendication 1, caractérisé en ce que la biellette de renvoi (6) comprend une chape de forme sensiblement triangulaire dont un premier sommet (6a) est monté à pivotement par rapport à une extrémité supérieure (11a) de l'élément du châssis (11), un second Sommet (6b) est articulé à une extrémité de la première bielle (3) et un troisième sommet (6c) est articulé à une extrémité de la seconde bielle (5).

3. Semoir selon l'une des revendications 1 ou 2, caractérisé en ce que le bras support (4) est articulé à la partie centrale de châssis (1) par l'intermédiaire d'une chape mobile (4b) solidaire de l'extrémité du bras support (4) opposée au tronçon latéral (35) correspondant montée à pivotement, dans un plan sensiblement perpendiculaire à la direction de déplacement F du semoir, par rapport à une chape fixe (2a) solidaire de ladite partie fixe (1), l'une (42a) des extrémités du vérin de manoeuvre étant solidaire de la chape mobile (3a).

4. Semoir selon l'une des revendications 1 à 3, caractérisé en ce que la partie fixe de châssis (1) comprend une poutre centrale (13) solidaire d'une poutre support (2) en forme de V renversé à la partie inférieure de laquelle est articulé chaque bras support (4) et au sommet de laquelle est solidarisé l'une (42b) des extrémités du vérin de manoeuvre (42), la poutre support (2) supportant également ledit élément de châssis (11) qui est conformé en V et dont les deux sommets portent chacun une biellette de renvoi (6).

5. Semoir selon la revendication 4, lorsqu'elle est rattachée à la revendication 3, caractérisé en ce que ladite poutre centrale (2) porte à chaque extrémité inférieure ladite chape fixe (2a).

6. Semoir selon l'une des revendications 1 à 5, caractérisé en ce qu'en position de travail de chaque tronçon latéral (35), les points de la biellette de renvoi (6) respectivement articulés à la partie fixe de châssis (1) et à la première bielle (3) sont alignés suivant une direction sensiblement parallèle aux tronçons latéraux (35) et la seconde bielle (5) est en position sensiblement horizontale

7. Semoir selon l'une des revendications 1 à 6, caractérisé en ce qu'en position de transport de chaque tronçon latéral (35), les points de la biellette de renvoi (6) respectivement articulés à la partie fixe de châssis (1) et à la première bielle (3) sont alignés suivant une direction sensiblement parallèle aux tronçons latéraux (35) et la seconde bielle (5) est en position sensiblement verticale.

8. Semoir selon l'une des revendications 1 à 7, caractérisé en ce que le corps (42c) de chaque vérin de manoeuvre est solidarisé à la partie fixe de châssis (1) tandis que sa tige (42d) est solidarisée à l'extrémité du bras support (3) opposée au tronçon latéral (35) correspondant.

9. Semoir selon l'une des revendications 3 à 8, caractérisé en ce que la biellette (6), la bielle (5) et la chape mobile (4b) sont conçues de manière que le mouvement de pivotement de la biellette (6) s'inverse lors de la course du tronçon latéral (35) correspondant, sous l'action du vérin (42) .

FIG. 1

EP 0 420 734 A1

FIG. 2

FIG. 3

EP 0 420 734 A1

**Office européen
des brevets**

# RAPPORT DE RECHERCHE
# EUROPEENNE

Numéro de la demande

## EP 90 40 2628

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | FR-A-2 577 747 (NODET-GOUGIS) <br> * page 15, ligne 22 - page 18, ligne 25; figures 1-3 * <br> − − − | 1,3-5,8. | A 01 B 73/04 <br> A 01 C 7/00 |
| A | FR-A-2 541 559 (ATELIERS RIBOULEAU) <br> * page 2, ligne 29 - page 5, ligne 11; figures 1, 2. * <br> − − − | 1,4,5,8. | |
| A | US-A-4 206 815 (HATCHER) <br> * colonne 2, ligne 60 - colonne 4, ligne 46; figures 1-3, 7, 8. * <br> − − − − | 1,4,5,8. | |

| DOMAINES TECHNIQUES RECHERCHES (Int. Cl.5) |
|---|
| A 01 B <br> A 01 C <br> A 01 M |

Le présent rapport de recherche a été établi pour toutes les revendications

| Lieu de la recherche | Date d'achèvement de la recherche | Examinateur |
|---|---|---|
| La Haye | 11 janvier 91 | WOHLRAPP R.G. |

CATEGORIE DES DOCUMENTS CITES

X : particulièrement pertinent à lui seul
Y : particulièrement pertinent en combinaison avec un
autre document de la même catégorie
A : arrière-plan technologique
O : divulgation non-écrite
P : document intercalaire
T : théorie ou principe à la base de l'invention

E : document de brevet antérieur, mais publié à la
date de dépôt ou après cette date
D : cité dans la demande
L : cité pour d'autres raisons

& : membre de la même famille, document
correspondant